# EUROPEAN PATENT SPECIFICATION

(11) **EP 2 768 257 B1**
(45) Date of publication and mention of the grant of the patent: **28.12.2016**
(21) Application number: 12840807.7
(22) Date of filing: 15.10.2012
(51) Int. Cl.: H04W 36/30, H04W 36/08, H04W 36/20

(54) **METHOD IN WHICH A TERMINAL TRANSCEIVES A SIGNAL IN A WIRELESS COMMUNICATION SYSTEM AND APPARATUS FOR SAME**
VERFAHREN ZUM SENDEN/EMPFANGEN EINES SIGNALS DURCH EIN ENDGERÄT IN EINEM DRAHTLOSEN KOMMUNIKATIONSSYSTEM UND VORRICHTUNG DAFÜR
PROCÉDÉ DANS LEQUEL UN TERMINAL ÉMET-REÇOIT UN SIGNAL DANS UN SYSTÈME DE COMMUNICATION SANS FIL ET APPAREIL CORRESPONDANT

(30) Priority: 14.10.2011 US 201161547044 P
(43) Date of publication of application: 20.08.2014
(73) Proprietor: LG ELECTRONICS INC., Yeongdeungpo-gu Seoul 150-721 (KR)
(72) Inventor: LEE, Seungmin, Anyang-si Gyeonggi-do 431-080 (KR); KIM, Hakseong, Anyang-si Gyeonggi-do 431-080 (KR); SEO, Hanbyul, Anyang-si Gyeonggi-do 431-080 (KR)
(74) Representative: Frenkel, Matthias Alexander
(86) International application number: PCT/KR2012/008373
(87) International publication number: WO 2013/055173

(56) References cited:
- WO-A1-2008/096240
- US-A1- 2008 232 326
- US-A1- 2009 046 656
- US-A1- 2010 226 340
- US-A1- 2010 290 435
- K. RAVI ET AL.: '4G Mobile Broadband – LTE Network Architecture and Protocol Stack.' INTERNATIONAL JOURNAL OF RESEARCH AND REVIEWS IN AD HOC NETWORKS vol. 1, no. 1, March 2011,
- T.G., NOH ET AL.: 'Standardization of 3GPP LTE and LTE-Advanced.' ELECTRONICS AND TELECOMMUNICATIONS TRENDS vol. 23, no. 3, June 2008, XP008147770

## Description

### Field of the Invention

The present invention relates to a wireless communication system and, most particularly, to a method in which a terminal transceives a signal in a wireless communication system and an apparatus for the same.

### Background Art

As an example of a communication system to which the present invention may be applied, a 3GPP LTE (3^{rd} Generation Partnership Project Long Term Evolution; hereinafter referred to as "LTE") communication system will now be broadly described.

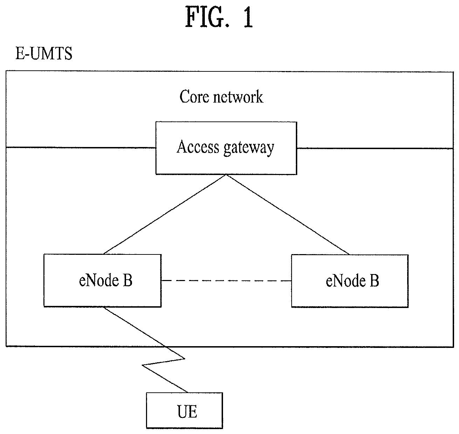

Fig. 1 illustrates a general view of an E-UMTS network structure as an example of a communication system. Herein, the E-UMTS (Evolved Universal Mobile Telecommunications System) corresponds to a system evolved from the conventional UMTS (Universal Mobile Telecommunications System). The 3GPP is presently carrying out a basic standardization process for the E-UMTS. Generally, the E-UMTS may also be referred to as an LTE system. For details of the technical specifications of the UMTS and the E-UMTS, reference may be made to Release 7 and Release 8 of "3rd Generation Partnership Project; Technical Specification Group Radio Access Network".

Referring to Fig. 1, the E-UMTS includes a User Equipment (UE), base stations (eNode B; eNB), and an Access Gateway (AG), which is located at an end of a network (E-UTRAN) and connected to an external network. The base stations can simultaneously transmit multiple data streams for a broadcast service, a multicast service and/or a unicast service.

One or more cells may exist for one base station. One cell is set to one of bandwidths of 1.25, 2.5, 5, 10, 15, and 20Mhz to provide a downlink or uplink transport service to several user equipments. Different cells may be set to provide different bandwidths. Also, one base station controls data transmission and reception for a plurality of user equipments. The base station transmits Downlink (DL) scheduling information of downlink data to the corresponding user equipment to notify information related to time and frequency domains to which data will be transmitted, encoding, data size, and HARQ (Hybrid Automatic Repeat and reQuest). Also, the base station transmits Uplink (UL) scheduling information of uplink data to the corresponding user equipment to notify information related to time and frequency domains that can be used by the corresponding user equipment, encoding, data size, and HARQ. An interface for transmitting user traffic or control traffic can be used between the base stations. A Core Network (CN) may include the AG and a network node or the like for user registration of the UE. The AG manages mobility of a UE on a TA (Tracking Area) unit basis, wherein one TA unit includes a plurality of cells.

The wireless communication technology has been developed up to the LTE based upon WCDMA. However, the demands and expectations of the users and the manufacturers and providers are growing continuously. Also, since other wireless access technologies are constantly being developed, the wireless communication technology is required to newly evolve in order to ensure competiveness in the future. Accordingly, characteristics, such as reduced cost for each bit, extended service availability, usage of a flexible frequency band, simple structure and open interface, and adequate power consumption of the user equipment are being requested.

US 2008/0232326 A1 disclose a reduction of wireless communication network interference by sending handover measurement information from mobile stations in conjunction with sending uplink scheduling requests, and by correspondingly making combined handover and uplink resource scheduling decisions. In this context, the combined decision considers both the handover measurement information and the uplink scheduling request, and determines whether a serving cell grants or denies the request and whether handover from the serving cell to a neighboring cell is or is not initiated for the mobile station. The combined determination provides for timely handover of the mobile station, such as where the mobile station is operating near a cell edge and issues an uplink scheduling request to its currently serving cell.

US 2010/0226340 A1 discloses a method and apparatus for controlling interference in a wireless communication system including a first step of performing a handoff measurement of a signal parameter for a current site and for nearby sites, and performing a comparison of the signal parameters to select the nearby site having the strongest signal parameter. Another step includes defining a target maximum allowable noise rise for the selected nearby site. Another step includes calculating an upper bound for at least one operating parameter in the current site. Another step includes determining whether a maximum for the at least one operating parameter exceeds the upper bound. Another step includes constraining the at least one operating parameter to no more than the upper bound if the maximum for the at least one operating parameter exceeds the upper bound.

### Detailed Description of the Invention

### Technical Objects

Based upon the above-described discussion, a method in which a terminal transceive a signal in a wireless communication system and an apparatus for the same will hereinafter be proposed.

### Technical Solutions

In an aspect of the present invention, a method for transceiving a signal at a user equipment in a wireless communication system is defined by independent claim 1.

Specific embodiments of the method are defined by dependent claims 2 to 7.

In another aspect of the present invention, a user equipment in a wireless communication system is defined by independent claim 8.

Specified embodiments of the user equipment are defined by dependent claims 9 to 13.

### Effects of the Invention

According to the exemplary embodiment of the present invention, in a wireless communication system, a user equipment may effectively transmit and receive a signal to and from a base station.

The effects that may be gained from the embodiment of the present invention will not be limited only to the effects described above. Accordingly, additional effects of the present application will be set forth in part in the description which follows and in part will become apparent to those having ordinary skill in the art upon examination of the following or may be learned from practice of the present application.

### Brief Description of the Drawings

Fig. 1 illustrates a general view of an E-UMTS network structure as an example of a wireless communication system.
Fig. 2 illustrates a Control Plane structure and a User Plane structure of a Radio Interface Protocol between a user equipment and the E-UTRAN based upon the 3GPP radio access network standard.
Fig. 3 illustrates physical channels that are used in the 3GPP system and a general method for transmitting signals using such physical channels.
Fig. 4 illustrates an exemplary structure of a radio frame that is used in the LTE system.
Fig. 5 illustrates an exemplary structure of a downlink radio frame that is used in the LTE system.
Fig. 6 illustrates an example wherein each of eNB1 and eNB2 interfers within the downlink communication of its counterpart, when each of the eNB1 and eNB2 performs downlink communication with its respective UE.
Fig. 7 illustrates an example wherein the CRS respective to each of the eNB1 and eNB2 acts as interference in the PDSCH region of each eNB, when the cell identifiers respective to the eNB1 and eNB2 are different from one another in the situation of Fig. 6.
Fig. 8 illustrates an exemplary situation wherein handover is performed from eNB1 and eNB2, by having the location of UE1-1 changed in the situation of Fig. 6.
Fig. 9 illustrates an example of a user equipment transporting information interference to a serving eNB according to an exemplary embodiment of the present invention.
Fig. 10 illustrates a block view showing the structure of a communication device according to an exemplary embodiment of the present invention.

### Mode for Carrying Out the Present Invention

Hereinafter, reference will now be made in detail to the preferred embodiments of the present invention, examples of which are illustrated in the accompanying drawings. The detailed description of the present invention is provided to facilitate the understanding of the configuration, operation, and other characteristics of the present invention. The following embodiments of the present invention correspond to examples wherein the technical features of the present invention are applied in the 3GPP system.

The description of the present invention will describe the embodiments of the present invention by using the LTE system and the LTE-A system. However, this is merely exemplary, and, therefore, the present invention may be applied to any other corresponding to the above-described definition. Also, the description of the present invention will also describe the embodiments of the present invention based upon an FDD (Frequency Division Duplex) method. However, this is also merely exemplary, and, therefore, the present invention may also be easily modified and applied to an H-FDD method or a TDD (Time Division Duplex) method.

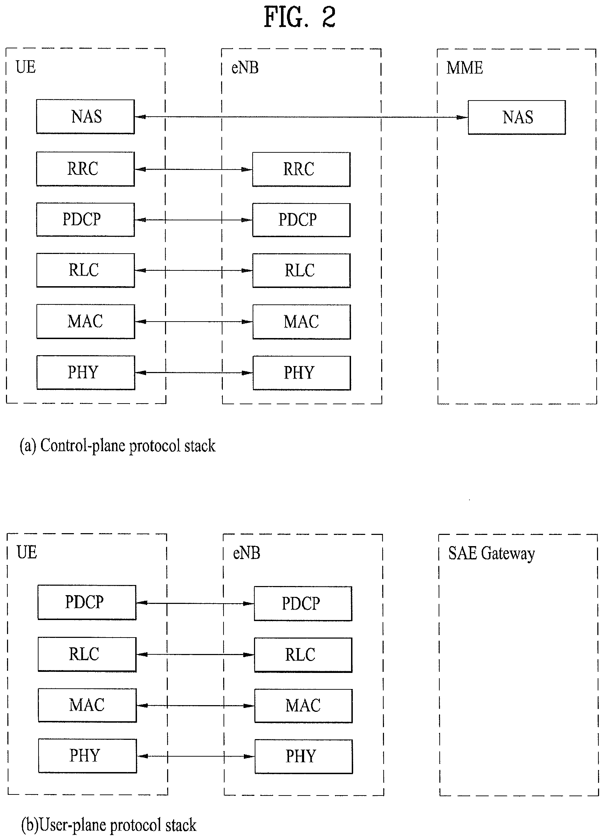

Fig. 2 illustrates a Control Plane structure and a User Plane structure of a Radio Interface Protocol between a user equipment and the E-UTRAN based upon the 3GPP radio access network standard. A control plane refers to a path through which control messages are transmitted. Herein, the control messages are used by the User Equipment (UE) and network in order to manage a unit. And, a user plane refers to a path through which data generated from an application layer are transmitted. Such data may include audio data or Internet packet data, and so on.

A first layer, which corresponds to a physical layer, uses a physical channel to provide an Information Transfer Service to a higher layer. The physical layer is connected to a Medium Access Control layer, which corresponds to a higher layer, through a Transport Channel. And, herein, data is transported between the Medium Access Control layer and the physical layer through the Transport Channel (Transport Channel). In a data transmission between a physical layer of the transmitting end and a physical layer of the receiving end, data are transported between the physical layers through a physical channel. Herein, the physical layer uses time and frequency as radio resource. More specifically, in a downlink, the physical channel is modulated by using an OFDMA (Orthogonal Frequency Division Multiple Access) scheme, and, in an uplink, the physical channel is modulated by using an SC-FDMA (Single Carrier Frequency Division Multiple Access) scheme.

A Medium Access Control (MAC) layer of a second layer provides services to a Radio Link Control (RLC) layer, which corresponds to higher layer, through a logical channel. The Radio Link Control (RLC) layer of the second layer supports the transmission of reliable data. The function of the RLC layer may also be realized by a functional block within the MAC. A PDCP (Packet Data Convergence Protocol) layer of the second layer performs a header compression function, which can reduce unnecessary control information in order to efficiently transmit IP packets, such as IPv4 or IPv6, in a wireless (or radio) interface having a narrow bandwidth.

A radio resource control (RRC) layer which is positioned in a lowermost portion of a third layer is defined only in the control plane. And, in relation with the configuration, re-configuration, and release of radio bearers (RBs), the RRC layer performs the role of controlling the logical channels, the transmission channels, and the physical channels. The Radio Bearer refers to a service that is provided by the second layer in order to deliver (or transport) data between the UE and the network. In order to do so, the RRC layers of the UE and the network exchanges RRC messages to and from one another. If an RRC connection exists between the RRC layer of the UE and the RRC layer of the network, the user equipment is in an RRC Connected Mode. And, if not, the user equipment is in an RRC Idle Mode. An NAS (Non-Access Stratum) layer, which is located above the RRC layer performs the roles of Session Management and Mobility Management.

In the network, downlink transmission channels that transmit data to the UE include a BCH (Broadcast Channel), which transmits system information, a PCH (Paging Channel), which transmits paging messages, and a downlink SCH (Shared Channel), which transmits information other than the system information, such as user traffic or control messages. In case of traffic information or control messages of a downlink multicast or broadcast service, the corresponding data may be transmitted through a downlink SCH or may also be transmitted through a separate downlink MCH (Multicast Channel). Meanwhile, uplink transmission channels that transmit data from the UE to the network include a RACH (Random Access Channel), which transmits initial control messages, and an uplink SCH (Shared Channel), which transmits information other than the system information, such as user traffic or control messages. Logical Channels being in a level higher than the transmission channel and being mapped to the transmission channel include a BCCH (Broadcast Channel), a PCCH (Paging Control Channel), a CCCH (Common Control Channel), an MCCH (Multicast Control Channel), an MTCH (Multicast Traffic Channel), and so on.

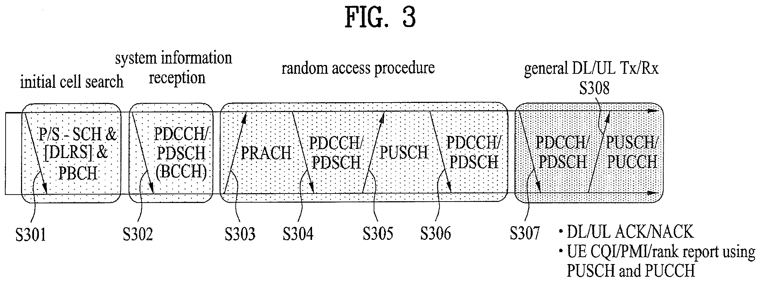

Fig. 3 illustrates physical channels that are used in the 3GPP system and a general method for transmitting signals using such physical channels.

The user equipment performs initial cell search such as synchronization with the base station, when it newly enters a cell or when the power is turned on (S301). In order to do so, the user equipment establishes synchronization with the base station by receiving a Primary Synchronization Channel (P-SCH) and a Secondary Synchronization Channel (S-SCH) from the base station, and then acquires information such as cell ID, and so on. Thereafter, the user equipment may acquire broadcast information within the cell by receiving a Physical Broadcast Channel from the base station. Meanwhile, in the step of initial cell search, the user equipment may receive a Downlink Reference Signal (DL RS) so as to verify the downlink channel status.

Once the user equipment has completed the initial cell search, the corresponding user equipment may acquire more detailed system information by receiving a Physical Downlink Control Channel (PDCCH) and a Physical Downlink Control Channel (PDSCH) based upon the respective information carried in the PDCCH (S302).

Meanwhile, if the user equipment initially accesses the base station, or if there are no radio resources for signal transmission, the user equipment may perform a Random Access Procedure (RACH) with respect to the base station (S303 to S306). In order to do so, the user equipment may transmit a specific sequence to a preamble through a Physical Random Access Channel (PRACH) (S303 and S305), and may receive a response message respective to the preamble through the PDCCH and the PDSCH corresponding to the PDCCH (S304 and S306). In case of a contention based RACH, a Contention Resolution Procedure may be additionally performed.

After performing the above-described process steps, the user equipment may perform PDCCH/PDSCH reception (S307) and Physical Uplink Shared Channel (PUSCH)/Physical Uplink Control Channel (PUCCH) transmission (S308), as general uplink/downlink signal transmission procedures. Most particularly, the user equipment receives Downlink Control Information (DCI) through the PDCCH. Herein, the DCI includes control information, such as resource allocation information respective to the UE, and the format of the DCI may vary depending upon the purpose for using the DCI.

Meanwhile, the control information, which is transmitted by the user equipment to the base station or received by the user equipment from the base station via uplink, includes downlink/uplink ACK/NACK signals, a CQI (Channel Quality Indicator), a PMI (Precoding Matrix Index), an RI (Rank Indicator), and so on. In case of the 3GPP LTE system, the user equipment may transmit control information, such as the above-described CQI/PMI/RI through the PUSCH and/or the PUCCH.

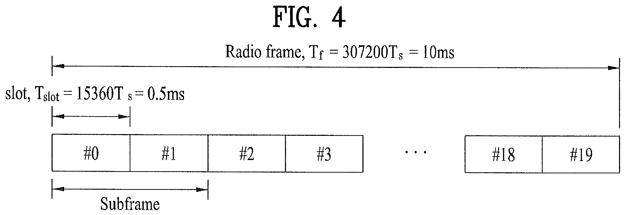

Fig. 4 illustrates an exemplary structure of a radio frame that is used in the LTE system.

Referring to Fig. 4, a radio frame has the length of 10ms (327200 × T_{S}) and is configured of 10 subframes each having the same size. Each subframe has the length of 1ms and is configured of 2 slots. Each slot has the length of 0.5ms (15360 × T_{S}). Herein, T_{S} represents a sampling time and is indicated as T_{S}=1/(15kHz×2048)=3.2552×10⁻⁸ (approximately 33ns). A slot includes a plurality of OFDM symbols in the time domain and includes a plurality of Resource Blocks (RBs) in the frequency domain. In the LTE system, one resource block includes 12 subcarriers x 7(6) OFDM symbols. A TTI (Transmission Time Interval), which corresponds to a unit time during which data are transmitted, may be decided as one or more subframe units. Herein, the above-described radio frame structure is merely exemplary. And, therefore, the number of subframes included in a radio frame, or the number of slots included in a subframe, or the number of OFDM symbols included in a slot may be diversely varied.

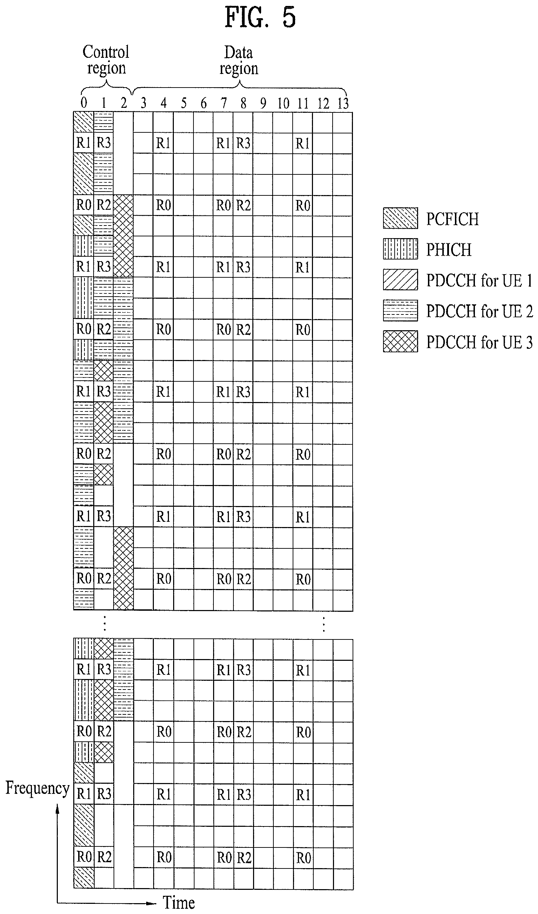

Fig. 5 illustrates an exemplary structure of a downlink radio frame that is used in the LTE system.

Referring to Fig. 5, one subframe is configured of 14 OFDM symbols. Depending upon the subframe settings, the first one to three OFDM symbols are used as the control region, and the remaining 13∼11 OFDM symbols are used as the data region. Referring to the drawing, R1 to R4 respectively represent Reference Signals (RSs) or Pilot Signals for antennas 0 to 3. Regardless of the control region and the data region, the RS is fixed within the subframe according to a consistent pattern. A control channel is allocated to resources of the control region to which the RS is not allocated. And, a traffic channel is allocated to resources of the data region to which the RS is not allocated. Control channels that are allocated to the control region may include a PCFICH (Physical Control Format Indicator CHannel), a PHICH (Physical Hybrid-ARQ Indicator CHannel), a PDCCH (Physical Downlink Control CHannel), and so on.

As a Physical Control Format Indicator Channel, the PCFICH notifies the user equipment of the number of OFDM symbols used in the PDCCH for each subframe. The PCFICH is located in the first OFDM symbol and is configured at a higher priority level than the PHICH and the PDCCH. The PCFICH is configured of 4 REGs (Resource Element Groups), and each REG is distributed (or spread) within the control region based upon the Cell ID (Cell Identity). One REG is configured of 4 REs (Resource Elements). An RE represents a minimum physical resource defined by one subcarrier×one OFDM symbol. The PCFICH value indicates a value ranging from 1 to 3 or from 2 to 4 depending upon the bandwidth and is modulated by using QPSK (Quadrature Phase Shift Keying).

As a Physical HARQ (Hybrid-Automatic Repeat and request) Indicator Channel, the PHICH is used for delivering HARQ ACK/NACK respective to uplink transmission. More specifically, the PHICH represents a channel through which DL ACK/NACK information for UL HARQ is transmitted. The PHICH consists of one REG and is cell-specifically scrambled. An ACK/NACK is indicated by 1 bit and is modulated by using BPSK (Binary phase shift keying). The modulated ACK/NACK is distributed (or spread) by a Spreading Factor (SF) = 2 or 4. A plurality of PHICH being mapped to the same resource configures a PHICH group. The number of PHICHs being multiplexed in the PHICH group is decided in accordance with the number of spreading codes. The PHICH (group) is repeated 3 times in order to obtain diversity gain in the frequency domain and/or the time domain.

As a Physical Downlink Control Channel, the PDCCH is allocated to the first n number of OFDM symbols of a subframe. Herein, n is an integer equal to or greater than 1, and n is designated by the PCFICH. The PDCCH is configured of one or more CCEs. The PDCCH notifies each user equipment or a user equipment group of information associated to resource allocation of a PCH (Paging Channel) and a DL-SCH (Downlink-shared channel), Uplink Scheduling Grant, HARQ information, and so on. The PCH (Paging Channel) and the DL-SCH (Downlink-shared channel) are transmitted through the PDSCH. Therefore, with the exception for specific control information or specific service data, the base station and the user equipment generally transmit and receive data through the PDSCH.

Information on the user equipment (one user equipment or a plurality of user equipments) to which the data of the PDSCH are to be transmitted, and information on how the user equipments receive and decode the transmitted PDSCH data are included in the PDCCH and transmitted. For example, it is assumed that a specific PDCCH is processed with CRC masking with an RNTI (Radio Network Temporary Identity) "A", and it is also assumed that information on the data being transmitted by using a radio resource (*e.g.,* frequency position) "B" and a DCI format, *i.e.,* a transmission format information (*e.g*., transmission block size, modulation method, coding information, *etc.*) "C" are transmitted through a specific subframe. In this case, a user equipment within a cell uses its own RNTI so as to monitor the PDCCH. And, when one or more user equipments carries RNTI "A", the corresponding user equipments receive the PDCCH and then receive the PDSCH, which is indicated by "B" and "C", through the received PDCCH information.

Hereinafter, a channel state information (CSI) report will be described. In the current LTE standard, two different types of transmission methods, such as an open-loop MIMO, which is operated without any channel information, and a closed-loop MIMO, which is operated based upon channel information, exist. Most particularly, in the closed-loop MIMO, in order to acquire multiplexing gain of the MIMO antennae, each of the base station and the user equipment may perform beamforming based upon the channel state information. The base station transmits a reference signal to the user equipment in order to acquire the channel state information from the user equipment, and, then, the base station commands the user equipment to feedback channel state information, which is measured based upon the transmitted reference signal, through a PUCCH (Physical Uplink Control CHannel) or a PUSCH (Physical Uplink Shared CHannel).

The CSI may be broadly divided into three difference information types, such as RI (Rank Indicator), PMI (Precoding Matrix Index), CQI (Channel Quality Indicator). First of all, as described above, the RI indicates rank information of a channel and signifies a number of streams that can be received by the user equipment through the same frequency-time resource. Additionally, since the RI is decided by long term fading of the channel, the RI may be fed-back to the base station at a generally longer interval as compared to PMI, CQI values.

Secondly, as a value reflecting spatial characteristics of the channel, the PMI indicates a precoding matrix index of the base station, which is preferred by the user equipment, based upon a metric reference, such as SINR. Finally, as a value indicating the intensity of a channel, CQI indicates a reception SINR, which may be gained when the base station generally uses the PMI.

Meanwhile, in an LTE-A system, which is a standard for the next generation mobile communication system, it is expected that a CoMP (Coordinated Multi Point) method, which is not supported in the current standard, will be supported for the enhancement of the data transmission rate. Herein, the CoMP system refers to a system wherein 2 or more base stations or cell perform a cooperative communication with the user equipment, in order to enhance the communication performance between a user equipment and a base station (cell or sector), which are located in shadow areas.

The CoMP method may be categorized into a Joint Processing method of a cooperative MIMO format *(i.e.,* CoMP-Joint Processing (CoMP-JP)) and a CoMP-Coordinated Scheduling/beamforming (CoMP-CS/CB) method.

In case of a downlink, in the joint processing (CoMP-JP) method, the user equipment may instantly receive data at the same time from each base station performing CoMP. Then, by combining the signals received from the base stations, the user equipment may enhance the receiving performance (Joint Transmission; JT). Additionally, a method of having one base station among the base stations performing the CoMP transmission method transmit data to the user equipment at a specific time point may be considered (DPS; Dynamic Point Selection). Alternatively, in the CoMP-Coordinated Scheduling/Beamforming method (CoMP-CS/CB), the user equipment may instantly receive data through a single base station, *i.e*., serving base station by performing beamforming.

In case of an uplink, in the CoMP-JP method, each base station may simultaneously receive a PUSCH signal from the user equipment (Joint Reception; JR). Alternatively, in the CoMP-Coordinated Scheduling/Beamforming method (CoMP-CS/CB), only one base station may receive the PUSCH. At this point, a decision on whether or not the CoMP-Coordinated Scheduling/Beamforming method (CoMP-CS) is to be used is decided by the cooperating cells (or base stations).

Meanwhile, the CoMP scheme (or method) may be applied not only between homogeneous networks configured only of macro eNBs but also between heterogeneous networks.

Meanwhile, as a method for alleviating (or mitigating) inter-cell interference, a method, wherein an interfering cell uses a subframe that reduces the transmission power of some of the physical channels or that does not perform transmission to some of the physical channels, *i.e.,* ABS (almost blank subframe) and, wherein an interfered cell considers this detail and schedules the UE accordingly, is under discussion.

In this case, in light of the UE belonging to the interfered cell, the interference level may largely vary depending upon the subframe, and, in such situation, in order to perform more accurate radio link monitoring (RLM) operations, to perform more accurate radio resource management (RRM) operations, wherein RSRP (Reference Signal Received Power)/RSRQ (Reference Signal Received Quality), and so on are measured, or to perform the above-described CSI for link adaptation, in each subframe, the RLM/RRM and CSI measurements should be limited to subframe sets having uniform interference characteristics.

The present invention proposes a method for efficiently supporting UE data communication, when diverse methods for efficiently mitigating the corresponding inter-cell interference are applied within an environment where inter-cell interference exists. Hereinafter, for simplicity in the description, the proposed method will be described based upon a 3GPP LTE system. However, in addition to the 3GPP LTE system, the scope of application of the proposed method may be extended to other systems.

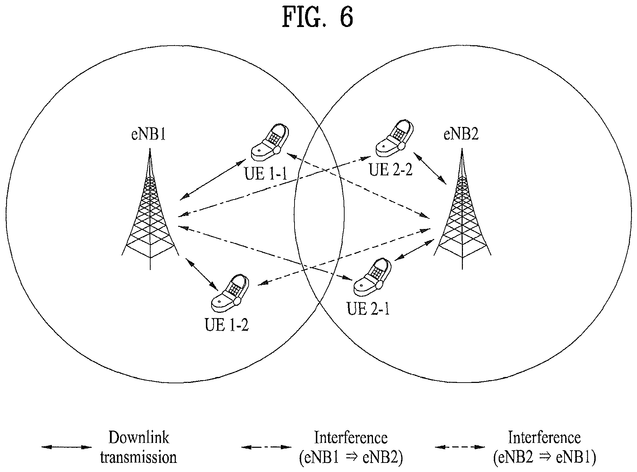

Fig. 6 illustrates an example wherein each of eNB1 and eNB2 interferes within the downlink communication of its counterpart, when each of the eNB1 and eNB2 performs downlink communication with its respective UE. Most particularly, it is assumed in Fig. 6 that eNB1 and eNB2 perform downlink communication by using a co-channel.

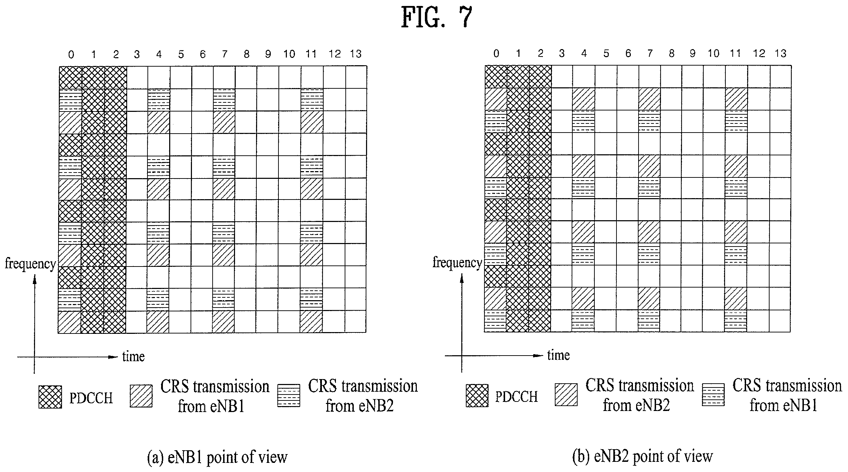

Additionally, Fig. 7 illustrates an example wherein the CRS respective to each of the eNB1 and eNB2 acts as interference in the PDSCH region of each eNB, when the cell identifiers respective to the eNB1 and eNB2 are different from one another in the situation of Fig. 6. Most particularly, it is assumed that eNB1 and eNB2 are both configured of 2X2 antenna settings (*i.e.,* 2 antenna ports).

Referring to Fig. 7, since a Vshift value, which corresponds to a frequency shift factor of a CRS, is defined by a cell identifier, in case the cell identifiers respective to eNB1 and eNB2 are different from one another, it can be known that the CRS being transmitted from each of the eNB1 and eNB2 are mapped to different subcarriers.

As it may be known in Fig. 7, in case a CRS interference of a neighboring cell (*i.e.,* N-eNB) being introduced to (or affecting) the PDSCH region is large, the UE may be incapable of correctly decoding a downlink signal, which is being transmitted from its serving eNB *(i.e.,* S-eNB). Accordingly, an additional method for mitigating interference introduced from N-eNB(s) should be considered.

For example, as a first method, there is a transmitting-end RM method, wherein the S-eNB performs rate-mating (RM) on downlink data and transmits the rate-matched downlink data to remaining regions *(i.e.,* resource elements to which downlink data can be mapped) after excluding resource elements (REs) having interference introduced thereto from N-eNB(s). Herein, the base station may notify the user equipment of information on whether or not the corresponding transmitting-end RM method is applied and/or information on the resource to which the transmission RM method is being applied (e.g., type of reference signal (of a neighboring cell) to which the transmission RM method is being applied/antenna port set-up information/information on (time/frequency) resource location, and so on), and so on, via signaling (e.g., physical layer or higher layer signals), which is pre-defined in advance.

Additionally, as a second method, there is a receiving-end puncturing method, wherein an S-eNB successfully transmits downlink data to its UE, yet wherein the UE of the S-eNB decodes the received downlink data by using only remaining resource elements after excluding resource elements having interference introduced thereto from N-eNBs. Herein, the base station may notify the user equipment of information on whether or not the corresponding receiving-end puncturing method is applied and/or information on the resource to which the receiving-end puncturing method is being applied (e.g., type of reference signal (of a neighboring cell) to which the receiving-end puncturing method is being applied/antenna port set-up information/information on (time/frequency) resource location, and so on), and so on, via signaling (*e.g*., physical layer or higher layer signals), which is pre-defined in advance.

Finally, as a third method, there is a receiving-end interference cancelling method, wherein an S-eNB successfully transmits downlink data to its UE, yet wherein the UE of the S-eNB decodes the transmitted downlink data after performing operations cancelling the interference introduced thereto from N-eNBs. Herein, the base station may notify the user equipment of information on whether or not the corresponding receiving-end interference cancelling method is applied and/or information on the resource to which the receiving-end interference cancelling method is being applied (*e.g*., type of reference signal (of a neighboring cell) to which the receiving-end interference cancelling method is being applied/antenna port set-up information/information on (time/frequency) resource location, and so on), and so on, via signaling (*e.g*., physical layer or higher layer signals), which is pre-defined in advance.

Hereinafter, for simplicity in the description, diverse methods for alleviating (or mitigating) interference caused from N-eNBs will be collectively referred to as an interference mitigation (IM) method. Additionally, hereinafter, for simplicity in the description, the eNB causing interference will be referred to as an interfering cell, and the eNB receiving (or being affected by) the interference will be referred to as an interfered cell.

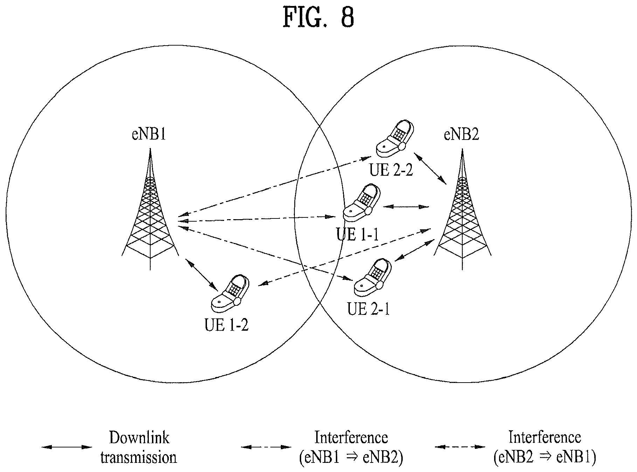

Fig. 8 illustrates an exemplary situation wherein handover is performed from eNB1 and eNB2, by having the location of UE1-1 changed in the situation of Fig. 6.

Referring to Fig. 8, in the perspective of UE1-1, not only is the S-eNB changed from eNB to eNB2, but the base station generating interference is also changed from eNB2 to eNB1. Therefore, in an environment wherein inter-cell interference exists, when a specific UE performs handover from its S-eNB to another (N-)eNB, additional operations and signaling are being required in order to support a more efficient downlink communication of the UE.

In the proposed method, under an environment wherein inter-cell interference exists, when a specific UE, which performed communication with the S-eNB, is handed-over to another (N-)eNB, the S-eNB notifies the corresponding UE of information on the interference the corresponding UE will receive or may receive from the S-eNB itself, when the corresponding UE performs communication with another (N-)eNB (hereinafter referred to as IF message). Such information, for example, may correspond to a CRS pattern that is used by the conventional S-eNB or a maximum number of CRS patterns that can be used including such CRS pattern (herein, it is an apparent fact that the proposed method may be extended to an IF message respective to diverse reference signals (*e.g*., CSI-RS) transmitted by the S-eNB). Therefore, even after the UE has been handed-over to another (N-)eNB, the UE may use the above-described IM methods, thereby enabling the interference-mitigated downlink communication to be continuously performed.

Additionally, when the S-eNB transmits a handover command message to the corresponding UE via RRC signaling, such IF message may also be transmitted via RRC signaling along with the handover command message. In such case, it will be advantageous to realize interference mitigation by using the above-described receiving-end puncturing method or receiving-end interference cancelling method. As another method, the IF message may also be transmitted by the S-eNB to the corresponding UE via RRC signaling independent from handover command message (before the handover process). As an additional method, when an (N-)eNB, which has received information related to the IF message from the S-eNB via pre-defined signaling (*e.g.*, X2 interface), transmits information related to handover, or when the corresponding (N-)eNB transmits a random access response message, or when the corresponding (N-)eNB transmits system information through a system information transport channel (*e.g*., PBCH or SIB), the (N-)eNB may notify the UE with information related to the IF message along with the corresponding message via pre-defined signaling (*e.g*., physical layer or higher layer signal).

Moreover, such IF message may be notified by the S-eNB to the UE through a specific downlink physical control (data) channel/downlink physical shared channel, and resources and fields that are used for such purpose may be decided in advance between the S-eNB and the UE.

As yet another method, after the UE has been handed-over to another (N-)eNB without any additional IF message signaling, *i.e.,* RRC layer signaling or physical layer signaling, the UE may perform operations applying IM methods either in accordance with rules pre-defined with respect to the interference that is to be received from the previous S-eNB or implicitly. For example, the UE may assume that the information on the interference that is to be received from the previous S-eNB (i. e., CRS pattern) corresponds to a number of antenna ports based upon the downlink communication, which is performed immediately before the handover process, or to a number of antenna ports respective to a maximum antennae settings of the previous S-eNB. Additionally, after being handed-over to another (N-)eNB, the S-eNB may notify the UE of an indicator, which indicates IM methods to be implicitly applied with respect to the interference that is to be received from the previous S-eNB, through higher layer signaling or through a specific field of a downlink physical control channel or through a specific resource area of a physical data channel.

Furthermore, when the UE of the interfered cell performs information detection respective to PBCH, PSS/SSS by using information from the interfering cell, since the UE may be capable of being informed in advance of information related to the interference that is to be received from the interfering cell (*e.g.,* CRS pattern), in case such operation method is being applied, the pre-defined specific IM methods may also be implicitly applied.

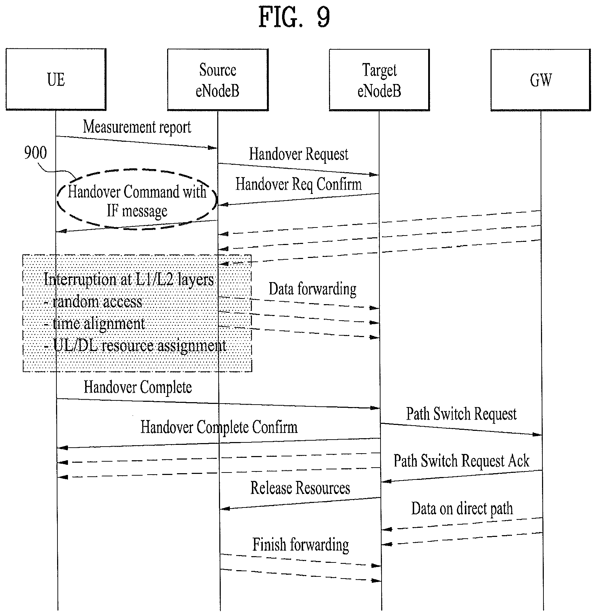

Fig. 9 illustrates an example of a user equipment transporting information interference to a serving eNB according to an exemplary embodiment of the present invention.

Referring to Fig. 9, when the S-eNB transmits a handover command message to the corresponding UE via RRC signaling, an example (reference numeral 900) of the S-eNB notifying the UE of information on the interference that the UE will receive or may receive *(i.e.,* IF message) is shown.

More specifically, when the UE sends a report on a Measurement report respective to the N-eNBs to the S-eNB, the S-eNB delivers a handover request message to an adequate target eNB.

Subsequently, the S-eNB receives a handover request verification (or acknowledgement) message from the target eNB and, then, transmits the handover command message designated to the target eNB to the corresponding UE. In this case, in the present invention, when the S-eNB transmits the handover command message to the corresponding UE, the S-eNB notifies the UE of information on the interference that the UE will receive or may receive (*i.e.,* IF message).

Therefore, even after the UE is handed-over to the target eNB, interference mitigated downlink communication may be continuously performed by using the above-described IM methods.

As yet another method, the above-described IF message may be transmitted along with a handover request message, which is transmitted by the S-eNB to another (N-) eNB for the handover of the specific UE.

For example, the other (N-)eNB having received the IF message may transmit information on the type of IM method (that is determined to be adequate based upon the IF message) that is to be applied to the UE that is scheduled to be handed-over (or information on whether or not the IM method, which is based upon the IF message received from the S-eNB, is adequate for application) to the S-eNB along with the handover request verification (or acknowledgement) message. Herein, the information of the IM method type (or information on whether or not the IM method based upon the IF message is adequate for application) may be based upon a table (or information), which is shared in advance between the eNBs, (*e.g.,* '00 -> transmitting-end RM method', '01 -> receiving-end puncturing method', '10 -> receiving-end interference cancelling method'). Finally, by notifying the UE of (information on the IM method type and) the IF message along with the handover command message (or by independently notifying the handover command message) via RRC signaling, the S-eNB may be capable of efficiently supporting the downlink communication of the UE that is scheduled to be handed-over.

Herein, the information on the IM method type may be based upon a table (or information), which is shared between the eNB and the UE. Additionally, (the information on the IM method type and) the IF message may be notified to the UE by the S-eNB through a specific downlink physical control (data) channel or downlink physical shared channel (or higher layer signal), and resources and fields that are used for such purpose may be decided in advance between the S-eNB and the UE.

The application of the above-described proposed method may be extended to all environments having interference introduced from N-eNBs existing therein. Additionally, the application may also be extended to an environment having the carrier aggregation (CA) method applied thereto (*e.g*., when interference exists between intra bands, when an extension carrier is being used). In addition to communication situations between eNB and UE, the application of the above-described proposed methods may also be extended to communication situations between 'eNB and RN' or 'RN and UE' or 'UE and UE (D2D)'. In addition to communication situations between eNB and UE, the application of the above-described proposed methods may also be extended to communication situations between 'eNB and RN' or 'RN and UE' or 'UE and UE (D2D)'. Furthermore, (in addition to a case when control information is being transmitted within a conventional PDCCH channel region), the application of the above-described proposed methods may also be extended to a case when control information is being transmitted within a conventional PDSCH channel region, *i.e.,* an environment wherein EPDCCH based communication is being performed.

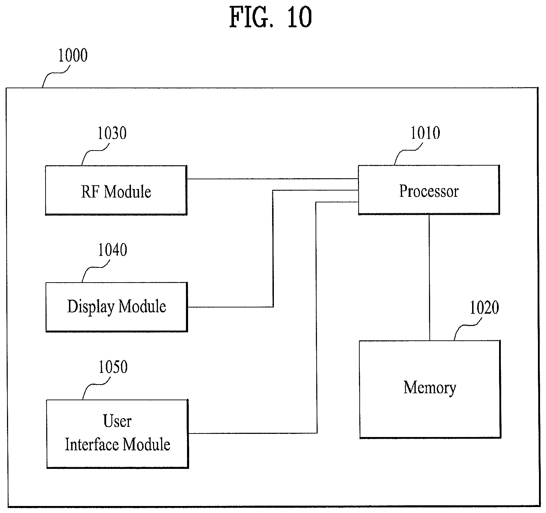

Fig. 10 illustrates a block view showing the structures of a communication device according to an exemplary embodiment of the present invention.

Referring to Fig. 10, a communication device (1000) includes a processor (1010), a memory (1020), an RF module (1030), a display module (1040), and a user interface module (1050).

The communication device (1000) is an exemplary illustration provided to simplify the description of the present invention. Also, the communication device (1000) may further include necessary modules. Also, in the communication device (1000) some of the modules may be divided into more segmented modules. Referring to Fig. 10, an example of the processor (1010) is configured to perform operations according to the embodiment of the present invention. More specifically, reference may be made to Fig. 1 to Fig. 9 for the detailed operations of the processor (1010).

The memory (1020) is connected to the processor (1010) and stores operating systems, applications, program codes, data, and so on. The RF module (1030) is connected to the processor (1010) and performs a function of converting baseband signals to radio (or wireless) signals or converting radio signals to baseband signals. In order to do so, the RF module (1030) performs analog conversion, amplification, filtering, and frequency uplink conversion or inverse processes of the same. The display module (1040) is connected to the processor (1010) and displays diverse information. The display module (1040) will not be limited only to the example given herein. In other words, generally known elements, such as LCD (Liquid Crystal Display), LED (Light Emitting Diode), OLED (Organic Light Emitting Diode) may also be used as the display module (1040). The user interface module (1050) is connected to the processor (1010), and the user interface module (1050) may be configured of a combination of generally known user interfaces, such as keypads, touchscreens, and so on.

The above-described embodiments of the present invention correspond to predetermined combinations of elements and features and characteristics of the present invention. Moreover, unless mentioned otherwise, the characteristics of the present invention may be considered as optional features of the present invention. Herein, each element or characteristic of the present invention may also be operated or performed without being combined with other elements or characteristics of the present invention. Alternatively, the embodiment of the present invention may be realized by combining some of the elements and/or characteristics of the present invention. Additionally, the order of operations described according to the embodiment of the present invention may be varied. Furthermore, part of the configuration or characteristics of any one specific embodiment of the present invention may also be included in (or shared by) another embodiment of the present invention, or part of the configuration or characteristics of any one embodiment of the present invention may replace the respective configuration or characteristics of another embodiment of the present invention. Furthermore, it is apparent that claims that do not have any explicit citations within the scope of the claims of the present invention may either be combined to configure another embodiment of the present invention, or new claims may be added during the amendment of the present invention after the filing for the patent application of the present invention.

The above-described embodiments of the present invention may be implemented by using a variety of methods. For example, the embodiments of the present invention may be implemented in the form of hardware, firmware, or software, or in a combination of hardware, firmware, and/or software. In case of implementing the embodiments of the present invention in the form of hardware, the method according to the embodiments of the present invention may be implemented by using at least one of ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, micro controllers, micro processors, and so on.

In case of implementing the embodiments of the present invention in the form of firmware or software, the method according to the embodiments of the present invention may be implemented in the form of a module, procedure, or function performing the above-described functions or operations. A software code may be stored in a memory unit and driven by a processor. Herein, the memory unit may be located inside or outside of the processor, and the memory unit may transmit and receive data to and from the processor by using a wide range of methods that have already been disclosed.

The present invention may be realized in another concrete configuration (or formation) without deviating from the scope and spirit of the essential characteristics of the present invention. Therefore, in all aspect, the detailed description of present invention is intended to be understood and interpreted as an exemplary embodiment of the present invention without limitation. The scope of the present invention shall be decided based upon a reasonable interpretation of the appended claims of the present invention and shall come within the scope of the appended claims and their equivalents.

### Industrial Applicability

As described above, although the method in which a terminal transceives a signal in a wireless communication system and an apparatus for the same are described based upon an example being applied to the 3GPP LTE system, the present invention may also be applied to other variety of wireless communication systems apart from the 3GPP LTE system.

## Claims

1. A method for transceiving a signal at a user equipment in a wireless communication system, the method comprising:
transmitting a measurement report on one or more neighboring base stations to a serving base station;
receiving a handover command message respective to a target base station among the one or more neighboring base stations from the serving base station, wherein the handover command message includes information on an interference to be received from the serving base station after a handover;
performing the handover to the target base station based on the handover command message; and
applying an interference mitigating scheme based on the information on the interference after the handover.

2. The method of claim 1, wherein the information on the interference comprises information on a cell-specific reference signal of the serving base station.

3. The method of claim 2, wherein the information on the cell-specific reference signal comprises a maximum number of antenna ports for the cell-specific reference signal defined in the serving base station.

4. The method of claim 2, wherein the information on the cell-specific reference signal comprises a number of antenna ports used in downlink communication performed between the serving base station and the user equipment before the handover.

5. The method of claim 1, further comprising:
transmitting the information on the interference to the target base station after the handover.

6. The method of claim 1, wherein the information on the interference is delivered to the target base station from the serving base station.

7. The method of claim 1, wherein each of the serving base station and the target base station has a different cell identifier.

8. A user equipment (1000) in a wireless communication system, the user equipment comprising:
a transmitting module (1030) configured to transmit a measurement report on one or more neighboring base stations to a serving base station;
a receiving module (1030) configured to receive a handover command message respective to a target base station among the one or more neighboring base stations from the serving base station, wherein the handover command message includes information on an interference to be received from the serving base station after a handover; and
a processor (1010) configured to control the transmitting module and the receiving module, so that the handover can be performed to the target base station based on the handover command message,
wherein the processor applies an interference mitigating scheme based on the information on the interference after the handover.

9. The user equipment of claim 8, wherein the information on the interference comprises information on a cell-specific reference signal of the serving base station.

10. The user equipment of claim 9, wherein the information on the cell-specific reference signal comprises a maximum number of antenna ports for the cell-specific reference signal defined in the serving base station.

11. The user equipment of claim 9, wherein the information on the cell-specific reference signal comprises a number of antenna ports used in downlink communication performed between the serving base station and the user equipment before the handover.

12. The user equipment of claim 8, wherein the transmitting module transmits the information on the interference to the target base station after the handover.

13. The user equipment of claim 8, wherein the information on the interference is delivered to the target base station from the serving base station.

## Patentansprüche

1. Verfahren zum Senden/Empfangen eines Signals an eine Benutzerausrüstung in einem drahtlosen Kommunikationssystem, das Verfahren umfassend:
Senden eines Messberichts über eine oder mehrere benachbarte Basisstationen zu einer versorgenden Basisstation;
Empfangen einer Übergabebefehlsnachricht entsprechend einer Ziel-Basisstation unter den einen oder mehreren benachbarten Basisstationen von der versorgenden Basisstation, wobei die Übergabebefehlsnachricht Informationen über eine von der versorgenden Basisstation nach einer Übergabe zu empfangene Interferenz umfasst;
Ausführen der Übergabe zu der Ziel-Basisstation basierend auf der Übergabebefehlsnachricht; und
Anwenden eines Interferenzminderungsschemas basierend auf den Informationen über die Interferenz nach der Übergabe.

2. Verfahren nach Anspruch 1, wobei die Informationen über die Interferenz Informationen über ein zellenspezifisches Referenzsignal der versorgenden Basisstation umfassen.

3. Verfahren nach Anspruch 2, wobei die Informationen über das zellenspezifische Referenzsignal eine maximale Anzahl an Antennenanschlüssen für das zellenspezifische in der versorgenden Basisstation definierte Referenzsignal umfassen.

4. Verfahren nach Anspruch 2, wobei die Informationen über das zellenspezifische Referenzsignal eine Anzahl an Antennenanschlüssen umfasst, die in einer Downlink-Kommunikation verwendet werden, wobei die Downlink-Kommunikation zwischen der versorgenden Basisstation und der Benutzerausrüstung vor der Übergabe ausgeführt wird.

5. Verfahren nach Anspruch 1, ferner umfassend:
Senden der Informationen über die Interferenz zu der Ziel-Basisstation nach der Übergabe.

6. Verfahren nach Anspruch 1, wobei die Informationen über die Interferenz zu der Ziel-Basisstation von der versorgenden Basisstation geliefert werden.

7. Verfahren nach Anspruch 1, wobei jede der versorgenden Basisstation und der Ziel-Basisstation eine unterschiedliche Zellenkennung aufweisen.

8. Benutzerausrüstung (1000) in einem drahtlosen Kommunikationssystem, die Benutzerausrüstung umfassend:
ein Sendemodul (1030), das konfiguriert ist, einen Messbericht über eine oder mehrere benachbarte Basisstationen zu einer versorgenden Basisstation zu senden;
ein Empfangsmodul (1030), das konfiguriert ist, eine Übergabebefehlsnachricht entsprechend einer Ziel-Basisstation unter den einen oder mehreren benachbarten Basisstationen von der versorgenden Basisstation zu empfangen, wobei die Übergabebefehlsnachricht Informationen über eine von der versorgenden Basisstation nach einer Übergabe zu empfangene Interferenz umfasst; und
einen Prozessor (1010), der konfiguriert ist, das Sendemodul und das Empfangsmodul zu steuern, so dass die Übergabe zu der Ziel-Basisstation basierend auf der Übergabebefehlsnachricht ausgeführt werden kann,
wobei der Prozessor ein Interferenzminderungsschema basierend auf den Informationen über die Interferenz nach der Übergabe anwendet.

9. Benutzerausrüstung nach Anspruch 8, wobei die Informationen über die Interferenz Informationen über ein zellenspezifisches Referenzsignal der versorgenden Basisstation umfassen.

10. Benutzerausrüstung nach Anspruch 9, wobei die Informationen über das zellenspezifische Referenzsignal eine maximale Anzahl an Antennenanschlüssen für das zellenspezifische in der versorgenden Basisstation definierte Referenzsignal umfassen.

11. Benutzerausrüstung nach Anspruch 9, wobei die Informationen über das zellenspezifische Referenzsignal eine Anzahl an Antennenanschlüssen umfasst, die in einer Downlink-Kommunikation verwendet werden, wobei die DownlinkKommunikation zwischen der versorgenden Basisstation und der Benutzerausrüstung vor der Übergabe ausgeführt wird.

12. Benutzerausrüstung nach Anspruch 8, wobei das Sendemodul die Informationen über die Interferenz zu der Ziel-Basisstation nach der Übergabe sendet.

13. Benutzerausrüstung nach Anspruch 8, wobei die Informationen über die Interferenz zu der Ziel-Basisstation von der versorgenden Basisstation geliefert werden.

## Revendications

1. Procédé destiné à transmettre et à recevoir un signal au niveau d'un équipement utilisateur dans un système de communication sans fil, le procédé comprenant les étapes consistant à :
transmettre un rapport de mesure sur une ou plusieurs stations de base avoisinantes vers une station de base de service ;
recevoir un message de commande de transfert par rapport à une station de base cible parmi la ou les plusieurs stations de base avoisinantes depuis la station de base de service, dans lequel le message de commande de transfert comprend des informations sur une interférence devant être reçue depuis la station de base de service après un transfert ;
réaliser le transfert vers la station de base cible sur la base du message de commande de transfert ; et
appliquer un schéma d'atténuation d'interférence sur la base des informations sur l'interférence après le transfert.

2. Procédé selon la revendication 1, dans lequel les informations sur l'interférence comprennent des informations sur un signal de référence spécifique de cellule de la station de base de service.

3. Procédé selon la revendication 2, dans lequel les informations sur le signal de référence spécifique de cellule comprennent un nombre maximal de ports d'antennes pour le signal de référence spécifique de cellule défini dans la station de base de service.

4. Procédé selon la revendication 2, dans lequel les informations sur le signal de référence spécifique de cellule comprennent un nombre de ports d'antennes utilisés dans une communication de liaison descendante réalisée entre la station de base de service et l'équipement utilisateur avant le transfert.

5. Procédé selon la revendication 1, comprenant en outre l'étape consistant à :
transmettre les informations sur l'interférence vers la station de base cible après le transfert.

6. Procédé selon la revendication 1, dans lequel les informations sur l'interférence sont délivrées vers la station de base cible depuis la station de base de service.

7. Procédé selon la revendication 1, dans lequel chacune parmi la station de base de service et la station de base cible possède un identificateur de cellule différent.

8. Équipement utilisateur (1000) dans un système de communication sans fil, l'équipement utilisateur comprenant :
un module de transmission (1030) configuré pour transmettre un rapport de mesure sur une ou plusieurs stations de base avoisinantes vers une station de base de service ;
un module de réception (1030) configuré pour recevoir un message de commande de transfert par rapport à une station de base cible parmi la ou les plusieurs stations de base avoisinantes depuis la station de base de service, dans lequel le message de commande de transfert comprend des informations sur une interférence devant être reçue depuis la station de base de service après un transfert ; et
un processeur (1010) configuré pour commander le module de transmission et le module de réception, de sorte que le transfert peut être réalisé vers la station de base cible sur la base du message de commande de transfert,
dans lequel le processeur applique un schéma d'atténuation d'interférence sur la base des informations sur l'interférence après le transfert.

9. Équipement utilisateur selon la revendication 8, dans lequel les informations sur l'interférence comprennent des informations sur un signal de référence spécifique de cellule de la station de base de service.

10. Équipement utilisateur selon la revendication 9, dans lequel les informations sur le signal de référence spécifique de cellule comprennent un nombre maximal de ports d'antennes pour le signal de référence spécifique de cellule défini dans la station de base de service.

11. Équipement utilisateur selon la revendication 9, dans lequel les informations sur le signal de référence spécifique de cellule comprennent un nombre de ports d'antennes utilisés dans une communication de liaison descendante réalisée entre la station de base de service et l'équipement utilisateur avant le transfert.

12. Équipement utilisateur selon la revendication 8, dans lequel le module de transmission transmet les informations sur l'interférence vers la station de base cible après le transfert.

13. Équipement utilisateur selon la revendication 8, dans lequel les informations sur l'interférence sont délivrées vers la station de base cible depuis la station de base de service.
